# EUROPEAN PATENT APPLICATION

(11) **EP 4 752 031 A1**
(43) Date of publication of application: **03.06.2026**
(21) Application number: 24216882.1
(22) Date of filing: 02.12.2024
(51) Int. Cl.: B62B 3/06, B62B 5/00, B66F 9/075

(54) **A MATERIAL HANDLING VEHICLE**

(71) Applicant: Toyota Material Handling Manufacturing Sweden AB, 595 81 MJÖLBY (SE)
(72) Inventor: JOHANSSON, Nicklas, Vadstena (SE); CARLSON, Magnus, Vikingstad (SE); FRIBERG, Kent, Mantorp (SE)
(74) Representative: Zacco Sweden AB

(57) **Abstract**

The disclosure relates to a material handling vehicle, MHV, (100) comprising: a load carrier (140) on a first side (S1) of the MHV (100); a tiller handle (150) for controlling the material handling vehicle; a chassis (160); a control unit (170) for controlling the MHV; at least one object sensor (172) configured to obtain measurement data within a predetermined region (174), the predetermined region (174) extending outwards from a second side (S2) of the MHV opposite the first side (S1), wherein the predetermined region (174) comprises a first zone (z1) ending at a first distance (d1) from the second side (S2) of the MHV, the first zone (z1) having a width (w1) less than or equal to the width of the chassis (wc); wherein the control unit (170) is configured to stop the MHV based on having determined the presence of an object within the first zone (z1).

## Description

### Technical field

The present disclosure relates to a material handling vehicle. More specifically, the disclosure relates to a material handling vehicle as defined in the introductory parts of the independent claims.

### Background art

The present disclosure is related to material handling vehicles (MHV). The MHV can also be named a truck not to be confused with a lorry. The MHV may have a load carrier in the shape of two forks. The load carrier can also be a gripping device, a lifting module comprising an operator. The MHV is powered by a motor that provides the ability to move the material handling vehicle, the motor may be electric.

The MHV also has a hydraulic system. The hydraulic system comprises a pump that is driven by a motor, which may be electric. The power source in the vehicle is in general a battery. The battery may be a lead acid battery or a Lithium Ion battery or any other type of battery. The battery is rechargeable.

The MHV is mainly designed to operate indoors, such as a warehouse, thus the MHV is commonly not provided with tires and suspension that allows it to travel long term outside. The MHV is preferred to not release any exhaust gas. The MHV has the ability through the hydraulic system to lift pallets, goods, material from floor level to a higher level. Examples of such material handling vehicles are order picker trucks, stacker trucks, pallet trucks.

The MHV may be allowed to be controlled by a walking operator. The control of the vehicle is made by a tiller handle that allows for walking and optionally a foldable platform for standing on, at longer travels.

### Summary of the invention

The MHVs of this disclosure may be a support leg MHV. Support leg MHVs are provided with two support legs that protrude forward from the chassis with a support wheel close to or at the outer end. The support leg function is that regardless of load lifted the MHV cannot tip forward. The MHV of this disclosure may also be a low-lifting MHV, such as an order-picker. In this version the support legs are replaced by a linkage arrangement under the load carrying forks for lifting a load a short distance for transport.

For MHVs operated via a tiller handle by a walking operator poses unique challenges for safe operation of the MHV compared to other MHV's. Because the operator must hold on to the tiller handle to move the MHV, the operator will often walk close to the MHV as it is moved in a direction towards the operator. This poses a potential risk to the operator. In particular, there is often a risk to the operator's feet when the operator is facing the MHV and walking backwards with the MHV moving towards the operator.

Mounting protection such as a rubber bumper with pressure sensors on the MHV to stop the MHV when the bumper hits the operator's feet provides some protection, but does not prevent collision and potential injury.

Lowering the chassis frame or add an extra lower bumper so the operator's feet cannot get stuck between the floor and chassis increases the risk for the MHV to get stuck on thresholds, holes in the floor, etc., and the ability to climb slopes is affected negatively.

Collision detection and avoidance systems that work for remote controlled MHVs and larger MHV's typically detects objects in an area fanning outwards in front of the MHV and to the sides, and an operator has to manually disable the collision detection and avoidance system, at least to one side of the MHV, if walking next to the MHV or wanting to drive the MHV along the side of an isle. Such systems would have to be disabled for an operator walking in front of the MHV during operational use, such as MHVs operated via a tiller handle by a walking operator.

There is thus a need for improved safety solutions for MHVs operated via a tiller handle by a walking operator.

It is an object of the present disclosure to mitigate, alleviate or eliminate one or more of the above-identified deficiencies and disadvantages in the prior art and solve at least the above mentioned problem.

According to a first aspect there is provided a material handling vehicle, MHV, comprising: an electric drive motor; an energy source, preferably a battery, for powering the electric drive motor, and the material handling vehicle in general; a hydraulic system, comprising a hydraulic pump powered by an electric motor or the electric drive motor; a load carrier on a first side of the MHV powered by the hydraulic system. Preferably the load carrier comprises at least two forks. The MHV has a tiller handle for controlling the material handling vehicle by a walking operator; a chassis which has at least one drive wheel powered by the electric drive motor and at least two further non-powered wheels; the chassis having a width. The MHV has a control unit that is connected to a material handling vehicle bus, for controlling the functions of the vehicle, and for receiving data from comprised sensors on the vehicle. The MHV has at least one object sensor configured to obtain measurement data within a predetermined region comprising one or more zones. The predetermined region extends outwards from a second side of the MHV, the second side being opposite the first side of the MHV The control unit is configured to receive the measurement data from the at least one object sensor. The predetermined region comprises a first zone. The first zone may begin at the second side of the MHV and, extending outwards in a direction along a central axis of the MHV, ending at a first distance from the second side of the MHV. The first zone has a width less than or equal to the width of the chassis. The control unit is configured to determine the presence of an object within the predetermined region based on the measurement data. The control unit is configured to brake, and/or brake to stop, and/or stop the MHV based on having determined the presence of an object within the first zone.

By limiting the width of the first zone and setting the extension of the first zone to the first distance, it is possible for the MHV to detect the operator and react before a collision has taken place, while still enabling the operator to stand and walk in front of the MHV as it is moving towards the operator.

According to some examples, the predetermined region further comprises a second zone, preferably beginning at the second side of the MHV and, extending outwards in a direction along the central axis of the MHV, ending at a predetermined distance from the end of the first zone. Preferably, the second zone may have a width less than or equal to the width of the first zone. The control unit may be configured to limit the maximum speed of the MHV in the direction of the second side to a predetermined first speed limit based on having determined the presence of an object within the second zone.

By having the width of the second zone less than or equal to the width of the first zone, the cumulative shape of the first and second zone can be tapered as needed to allow for the operator to walk diagonally in front of the MHV and not affect the behaviour of the MHV if standing or walking sufficiently far away from the MHV. At the same time, the second zone imposes additional safety by limiting the maximum speed of the MHV if the operator is present in the second zone.

According to some examples, the predetermined region further comprises a third zone, preferably beginning at the second side of the MHV and, extending outwards in a direction along the central axis of the MHV, ending at a predetermined distance from the end of the second zone. Preferably the third zone may have a width less than or equal to the width of the second zone. The control unit may be configured to limit the maximum speed of the MHV in the longitudinal direction of the MHV in the direction of the second side to a predetermined second speed limit based on having determined the presence of an object within the second zone. The second speed limit may be greater than the first speed limit. According to some examples, the third zone may have a width less than half of the width of the chassis.

By having the width of the third zone less than or equal to the width of the second zone, the cumulative shape of the first, second and third zone can be tapered as needed to allow for the operator to walk diagonally in front of the MHV and not affect the behaviour of the MHV if standing or walking sufficiently far away from the MHV. The third zone may add an extra layer of protection for operators when standing or walking along the central axis of the MHV. Since the operator is farther away from the MHV when being present in the third zone than when being present in the second zone, the maximum speed limit can be higher in the third zone than in the second zone, since the MHV has a longer distance on which to decelerate before a collision occurs. With a width less than half the width of the chassis, an operator can typically walk next to the central axis of the MHV while holding the tiller handle and remain outside of the third zone.

According to some examples, the first and/or the second and/or third distance may be determined by the control unit based on at least one of: a speed of the MHV, an acceleration of the MHV, a steering angle of the MHV, a current load on the load carrier and/or a breaking capacity of the MHV.

By dynamically changing the shape of the first and/or second and/or third distances based on at least one of: a speed of the MHV, an acceleration of the MHV, a steering angle of the MHV, a current load on the load carrier and a breaking capacity of the MHV, the safety measures of the MHV are automatically adapted to changing circumstances of the operational use of the MHV, thereby reducing the probability of a collision between the operator and the MHV compared to having the shape of all zones fixed.

According to some examples, the predetermined region further may comprise a fourth zone. The fourth zone preferably beginning at the second side of the MHV and, extending outwards in a direction along the central axis of the MHV, ending at a predetermined distance from the end of the third zone. The fourth zone preferably may have a width wider than the width of the chassis. The control unit may be configured to limit a maximum acceleration of the MHV when detecting the presence of an object in the fourth zone.

The fourth zone may detect the presence of an operator outwards from the second side of the MHV, but not within any of the first, second and third zone. The operator may thus be at low risk of colliding with the MHV and by limiting the acceleration of the MHV, the rate at which the operator can be put at greater risk is limited.

According to some examples, the control unit may be configured to issue a warning of a potential collision and/or adjust at least one of: the maximum speed of the MHV and a maximum acceleration of the MHV based on having determined the presence of an object within the predetermined region and the tiller handle is not in upright position or in a position where the tiller handle is being forced down to an end stop angled position. According to some examples, the warning comprises an audio and/or visual signal and/or a sensory signal.

When the tiller handle is not in upright position or in a position where the tiller handle is being forced down to an end stop angled position, this means that the operator may be currently operating or about to operate the MHV via the tiller handle. By issue a warning of a potential collision and/or adjust at least one of: the maximum speed of the MHV and a maximum acceleration of the MHV when having determined the presence of an object within the predetermined region, the detection of objects, such as an operator, within the predetermined region and the associated safety mechanisms are active when there is an operator in front of the MHV (on the second side of the MHV) and operating the MHV. Audio signals can be received by an operator even when facing away from the MHV. Visual signals improve visual tracking of the MHV and assists in operating the MHV safely.

According to some examples, the control unit may be further configured to issue the warning of a potential collision and/or adjust said at least one of: the maximum speed of the MHV and a maximum acceleration of the MHV only when the MHV is moving in the longitudinal direction of the MHV in the direction of the second side.

There is no risk of collision with the operator if the MHV is moving in a direction away from the operator. By limiting the safety measures to manifest only when the MHV is moving in the longitudinal direction of the MHV in the direction of the second side, the operator can operate the MHV freely when there is no risk of the MHV colliding with the operator.

According to some examples, the at least one object sensor comprises at least one of: an ultra-sonic radar; a camera; a light detection and ranging, LIDAR, sensor; a photocell and/or a vibration sensor.

Ultra-sonic radars and photocells provide cost-effective and reliable sensors for detecting the presence of an object within the predetermined region, while cameras and LIDARs further enable the use of classification algorithms to classify a detected object.

According to some examples, the predetermined region comprises a 3D volume and/or a 2D plane, preferably said 3D volume and/or 2D plane does not extend in vertical direction higher than the attachment point of the tiller handle when pivoted to a horizontal position.

According to some examples, the MHV further comprises a manual override mechanism configured to override the issuing of the warning of a potential collision and/or adjusting of said at least one of: the maximum speed of the MHV and a maximum acceleration of the MHV.

The manual override may allow operators to manoeuvre in tight spaces where obstacles would needlessly slow down or stop the MHV. The manual override can be combined with a limitation of a maximum speed of the MHV to provide a trade-off between manoeuvrability and safety.

According to some examples, the at least one object sensor is configured to transmit an error message based on an object sensor being obscured or detecting a malfunction, and wherein the control unit is configured to limit the maximum speed and/or acceleration of the MHV to a predetermined limit.

The error message can provide an indication that one or more sensor has been compromised and the maximum speed and/or acceleration of the MHV is limited until the underlying problem has been resolved, thereby limiting the operation of the MHV by an operator that may not know that there is a problem with one or more of the sensors.

According to some examples, the control unit may be configured such that the first zone and/or the second zone and/or the third zone and/or the fourth zone preferably all zones, is/are active when an operator is walking and controlling the MHV with the tiller handle.

According to some examples, the greatest limitation to the manoeuvrability of the MHV with respect to maximum speed, maximum acceleration and deceleration dictated by each zone may be applied to the MHV in regions where zones overlap.

According to some examples, the control unit may be configured to set the maximum speed, maximum acceleration and maximum deceleration of the MHV in regions of overlapping zones to the lowest maximum speed, lowest maximum acceleration and highest maximum deceleration of the overlapping zones when detecting the presence of an object in the respective regions of overlapping zones.

According to a second aspect there is provided a method of modifying a MHV comprising the steps of: providing a MHV comprising a control unit operable to control the MHV, and at least one object sensor connected to the control unit, and storing computer executable software on the control unit such that a MHV according to the first aspect is achieved. The disclosed method provides a MHV according to the first aspect and therefore has all the technical effects and advantages of the MHV according to the first aspect.

The present disclosure will become apparent from the detailed description given below. The detailed description and specific examples disclose preferred examples of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular examples only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example examples of the present disclosure, when taken in conjunction with the accompanying drawings.
Figure 1a shows a side view of a material handling vehicle according to the present disclosure;
Figure 1b shows a top view of the material handling vehicle according to the present disclosure;
Figure 1c shows a top view of the material handling vehicle according to the present disclosure in relation to an operator; and
Figure 2 shows a method of modifying an MHV for achieving a material handling vehicle according to the present disclosure.

### Detailed description

The present disclosure will now be described with reference to the accompanying drawings, in which preferred example examples of the disclosure are shown. The disclosure may, however, be embodied in other forms and should not be construed as limited to the herein disclosed examples. The disclosed examples are provided to fully convey the scope of the disclosure to the skilled person.

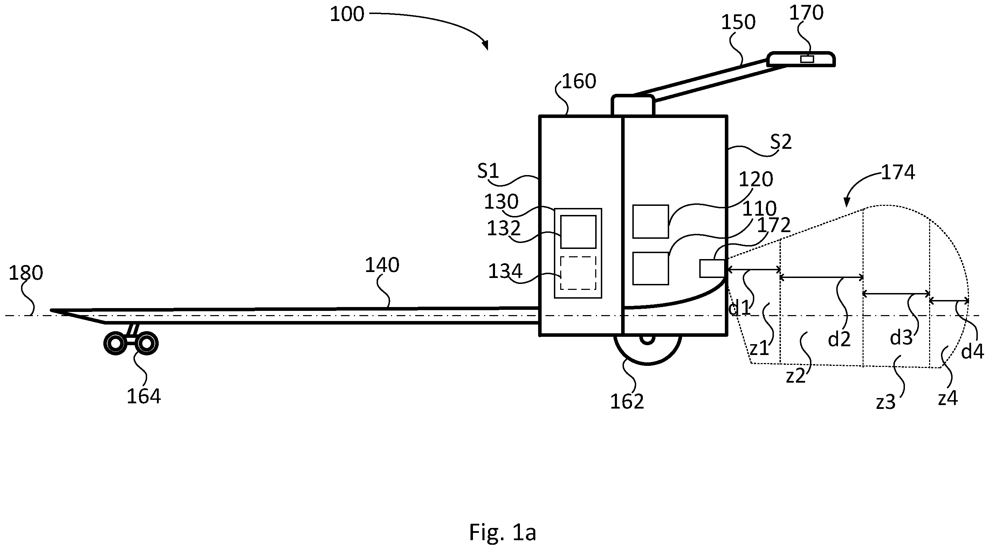

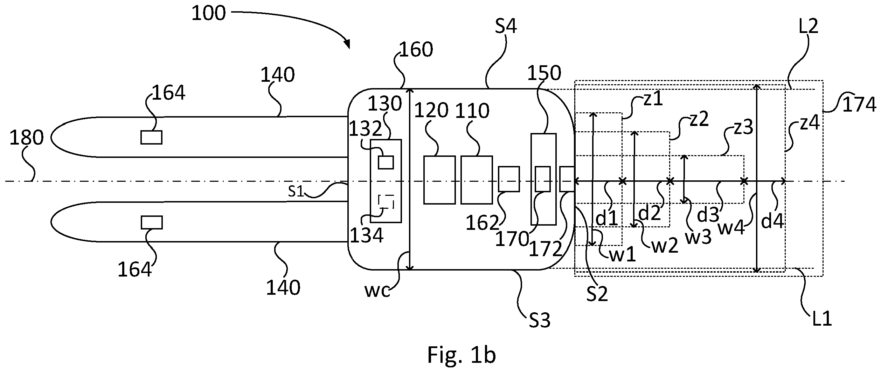

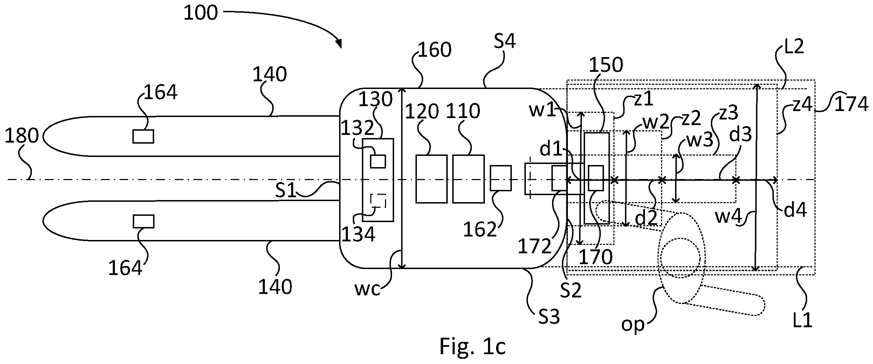

Figure 1a shows a side view of a material handling vehicle according to the present disclosure; Figure 1b shows a top view of the material handling vehicle according to the present disclosure; and Figure 1c shows a top view of the material handling vehicle according to the present disclosure in relation to an operator. The description of the disclosed material handling vehicle below will be given with respect to Figures 1a-1c simultaneously.

The material handling vehicle, MHV, 100 comprises a circumference that follows the outer boundary of the MHV around the vehicle. The MHV 100 comprises in general four sides. A first side S1 which is the side that comprises a load carrier. A second side S2 which is the side opposite the side S1. Further there are two longitudinal sides S3 and S4 running along the longitudinal axis of the MHV 100. An operator standing on the second side S2 looking at the MHV will have the first longitudinal side S3 to his left, and the second longitudinal side S4 to his right.

The first aspect of this disclosure shows a material handling vehicle, MHV, 100 comprising: an electric drive motor 110; an energy source 120, preferably a battery, for powering the electric drive motor 110 and the MHV 100 in general.

The MHV also comprises a hydraulic system 130, comprising a hydraulic pump 132 powered by an electric motor 134 or the electric drive motor 110.

The MHV also comprises a load carrier 140 on the first side S1 of the MHV 100, preferably the load carrier comprises at least two forks, powered by the hydraulic system 130. In general a hydraulic lift cylinder actuates directly or indirectly the load carrier for lifting of a load. Lowering of said load is enabled by opening valves in the hydraulic cylinder that allows for hydraulic fluid to leave the hydraulic cylinder.

The MHV also comprises a tiller handle 150 for controlling the material handling vehicle by a walking operator op. The tiller handle 150 comprises the control actuators for the operator. The tiller handle may also comprise a display for displaying operation data and also for example level of battery, load weight etc. The tiller handle 150 in general may comprise an operator identification unit, such as a key-board for entering a PIN-code. The tiller handle is arranged on a tiller bar. The tiller bar will in upright position brake the MHV to a stop. The tiller bar and handle if pressed down to horizontal or larger angle brake the MHV. The tiller handle also comprises a belly button. The belly button is positioned at the outer end of the handle, and will when pressed apply brakes to the MHV.

The MHV comprises a chassis 160 which has at least one drive wheel 162 powered by the electric drive motor 110 and at least two further non-powered wheels 164. The chassis 160 having a width defined as wc. The width wc should be construed in a general way. The chassis comprises a steel frame. But the width of the chassis should also comprise protruding elements etc, from the chassis. In general for this disclosure the width of the chassis, is the peripheral outer boundary of the material handling vehicle, not comprising the load carrier. The width wc may thus be defined as the smallest width that the MHV will pass through when moving. The chassis 160 may also be defined as having at least three sides being part of the circumference of the MHV.

The MHV also comprise at least one a control unit 170, that is connected to a material handling vehicle bus, for controlling the functions of the vehicle, and for receiving data from comprised sensors on the vehicle. The control unit 170 may be positioned in the tiller handle 150. The control unit 170 comprises the processors memory circuits etc, for storing a software and executing a software stored in its circuits. The bus of the MHV may in general be a CAN-bus or any other suitable bus.

The MHV comprises at least one object sensor 172 configured to obtain measurement data within a predetermined region 174 outside. The object sensor 172 is arranged to detect outside the periphery of the chassis of the MHV. The predetermined region 174 preferably comprises one or more zones. The predetermined region 174 extends outwards from the second side S2 of the MHV. The second side S2 of the MHV, being opposite the first side S1 of the MHV. The first side S1 in general comprises the load carrier 140. The control unit 170 is configured to receive the measurement data from the at least one object sensor 172. The predetermined region 174 comprises a first zone z1, preferably beginning at the second side S2 of the MHV and, extending outwards in a direction along a central axis 180 of the MHV. The first zone z1 ending at a first distance d1 from the second side S2 of the MHV, the first zone z1 having a width w1 less than or equal to the width of the chassis wc. The control unit 170 is configured to determine the presence of an object within the predetermined region 174 based on the measurement data; and wherein the control unit 170 is configured to brake, and/or brake to stop, and/or stop the MHV based on having determined the presence of an object within the first zone z1. It is preferred that no part or section of the predetermined region 174 extends past the lines L1, L2 that are extending past the second side S2 in direction of the second side s2, in parallel with the first and second longitudinal side S3, and S4.

By "braking" we herein mean to decelerate. By "to decelerate" we herein mean to accelerate in a direction at least partially opposite a current direction in which the MHV is travelling. Thus ,by at least partially opposite, we herein mean that, when velocity and acceleration is viewed as vectors, deceleration implies a vector component of an acceleration vector of the MHV being opposite the direction of the velocity vector describing the current speed and direction of the MHV. Thus, to brake means to reduce the current speed of the MHV. To brake to stop means to reduce the speed of the MHV until the speed of the MHV is zero. In other words, to brake to stop means to decelerate until the MHV comes to a standstill. To stop (as a verb) means to decelerate the current speed of the MHV until the speed of the MHV is zero using a maximum deceleration of the MHV. Thus, to brake to stop and to stop achieves the same end result, bringing the MHV to a standstill, but with a difference in how; to stop brings the MHV to a standstill in the fastest, most abrupt way possible, while to brake to stop decelerates the MHV, preferably using a predetermined deceleration, until the MHV comes to a stop or the object triggering the deceleration moves out of the zone(s) associated with imposing the deceleration. Thus, we consider also coast to stop without explicit using a mechanical brake, to be inside the disclosure. And brake should not be construed to involve only a mechanical brake, also braking by regenerating energy to a battery by using the electric drive motor as a generator is included in "brake".

One of the main ideas of the disclosed MHV 100 is to arrange the predetermined region 174 to accommodate an operator standing or walking in front of the MHV as it is moving towards the operator. The first zone z1 therefore does not extend beyond the width of the chassis wc. In some examples, the width of the first zone is less than the width of the chassis wc.

Likewise, the first distance d1 is preferably selected to strike a balance between allowing the MHV to decelerate in order to prevent a collision and allowing the operator as much space as possible when operating the MHV. Since the rate at which the MHV decelerates has an influence on how far the MHV will travel before coming to a complete stop, the control unit 170 is in some examples configured to decelerate the MHV using a first predetermined deceleration until the MHV has come to a complete stop or the object is no longer present in the first zone z1. In some further examples, the first predetermined deceleration is selected from a range of one point five kilometres per hour, km/h, to five km/h. For instance, the first predetermined deceleration could be two point five km/h.

According to some examples, the predetermined region 174 further comprises a second zone z2, preferably beginning at the second side S2 of the MHV and, extending outwards in a direction along the central axis 180 of the MHV, ending at a predetermined distance d2 from the end of the first zone z1, preferably the second zone z2 having a width w2 less than or equal to the width w1 of the first zone, and wherein the control unit 170 is configured to limit the maximum speed of the MHV in the direction of the second side S2 to a predetermined first speed limit based on having determined the presence of an object within the second zone z2. In some examples, the width w2 of the second zone z2 is less than the width w1 of the first zone. The narrower width w2 of the of the second zone z2 allows an operator to stand the side of the second zone and in front of the first zone z1, without triggering the effects of being present in either zone. The tapering effect of the width w2 of the second zone z2 being less than the width w1 of the first zone thus provides the operator with more room to operate the MHV while simultaneously keeping the safety measures of the first and second zones active. Since the second zone z2 extends farther away from the MHV than the first zone z1, the deceleration of the MHV could be set lower if an object is detected in the second zone z2 than if it is detected in the first zone z1. Thus, in some examples, the control unit 170 is in some examples configured to decelerate the MHV using a second predetermined deceleration if the presence of an object is determined in the second zone z2. If a first predetermined deceleration is defined for the first zone z1, the second predetermined deceleration may be lower than the first predetermined deceleration.

According to some examples, the predetermined region 174 further comprises a third zone z3, preferably beginning at the second side S2 of the MHV and, and extending outwards in a direction along the central axis 180 of the MHV, ending at a predetermined distance d3 from the end of the second zone z2, preferably the third zone z3 having a width w3 less than or equal to the width w2 of the second zone, and wherein the control unit 170 is configured to limit the maximum speed of the MHV in the longitudinal direction of the MHV in the direction of the second side S2 to a predetermined second speed limit based on having determined the presence of an object within the second zone z2, the second speed limit being greater than the first speed limit. The third zone z3 is particularly useful for determining the presence of an operator standing aligned with the central axis 180, directly in front of the HMV if the HMV where to move in the direction of the operator, but still being sufficiently narrow to allow the operator to operate the MHV via the tiller arm when standing next to the central axis, as shown in Fig. 1c. Thus, in some examples, the predetermined distance d3 is greater than the width w3 of the third zone. According to some examples, the third zone z3 has a width w3 less than half of the width wc of the chassis 160.

According to some examples, the first and/or the second and/or third distance d1, d2, d3 is/are determined by the control unit 170 based on at least one of: a speed of the MHV, an acceleration of the MHV, a steering angle of the MHV, a current load on the load carrier 140 and/or a breaking capacity of the MHV. By determining the first and/or second and/or third distances d1, d2, d3 based on said factors, the first and/or second and/or third zones z1-z3 will adjust their shapes based on the speed of the MHV, acceleration of the MHV, steering angle of the MHV, current load on the load carrier 140 and/or breaking capacity of the MHV in order to maintain the effects of the safety mechanisms of the MHV associated with each zone as the circumstances change. In other words, in some examples the first and/or second and/or third zone are configured to change dynamically based on said at least one of: a speed of the MHV, an acceleration of the MHV, a steering angle of the MHV, a current load on the load carrier 140 and a breaking capacity of the MHV.

According to some examples, the predetermined region 174 further comprises the predetermined region 174 further comprises a fourth zone z4, preferably beginning at the second side S2 of the MHV and, extending outwards in a direction along the central axis 180 of the MHV, ending at a predetermined distance d4 from the end of the third zone z3, the fourth zone z4 preferably having a width w4 wider than the width of the chassis wc, and wherein the control unit 170 is configured to limit a maximum acceleration of the MHV when detecting the presence of an object in the fourth zone z4. The limiting of the maximum acceleration smooths the operation of the MHV and reduces the likelihood of rapid transitions from the operator being in the fourth zone z4 and ends up in either of the other zones z1-z3.

The first, second, third and fourth zones z1-z4 have been illustrated as having rectangular shapes when projected onto the ground, as illustrated in Figs. 1b and 1c. These are merely non-limiting examples and the shapes of the zones z1-z4 as well as the predetermined region could take on any shape, such as rounded shapes. In particular, any of the first, second and third zones z1-z3 could have tapered shapes, wherein the zones decrease in width the farther away from the MHV they are. One of the purposes of gradually decreasing the width of the first, second and third zones z1-z3 is to enable different behaviours of the MHV depending on whether the operator is standing (or walking) to the side of the central axis 180 or on the central axis 180 as the MHV 100 is moving towards the operator. When standing to the side of the central axis, the operator is more likely to stay out of the first, second and third zones z1-z3, as illustrated in Fig. 1c, but may still be present in the fourth zone z4, if present.

The MHV needs to strike a balance between providing safe operation and providing smooth operation when the operator is located in the direction of movement of the MHV.

Thus, according to some examples, the control unit 170 is configured to issue a warning of a potential collision and/or adjust at least one of: the maximum speed of the MHV and a maximum acceleration of the MHV based on having determined the presence of an object within the predetermined region 174 and the tiller handle 150 is not in upright position or in a position where the tiller handle is being forced down to an end stop angled position. In some examples, the warning comprises an audio and/or visual signal and/or a sensory signal. In some examples, the visual signal is provided via a graphical user interface at the tiller handle. For instance, the visual signal may comprise information relating to the current speed and acceleration limitations imposed on the MHV. The audio signal may depend on in which zones an object has been detected. For instance, the audio signal can be arranged to alter frequency and/or amplitude based on object proximity to the MHV and/or in which zone an object is detected. According to some examples the sensory signal comprises a vibration. In some further examples, the vibration is provided via the tiller handle 150. According to some examples, the control unit 170 is configured such that the first zone z1 and/or the second zone z2 and/or the third zone and/or the fourth zone z4 preferably all zones z1,z2,z3,z4, is/are active when an operator is walking and controlling the MHV with the tiller handle 150.

Since there is no risk of collision with the operator, if the MHV is moving away from the operator, it may be desirable to limit the safety behavior of the MHV when the operator is present in the predetermined region to scenarios when the MHV is moving in a direction towards the operator.

Thus, according to some examples, the control unit 170 is further configured to issue the warning of a potential collision and/or adjust said at least one of: the maximum speed of the MHV and a maximum acceleration of the MHV only when the MHV is moving in the longitudinal direction of the MHV in the direction of the second side S2. Moving in the longitudinal direction of the MHV in the direction of the second side S2 may comprise a turning of the MHV. In other words, if the MHV is changing direction, at least some of the instantaneous movement may be directed in the current direction coinciding with the longitudinal direction of the MHV in the direction of the second side S2.

The warning may be issued based on the presence of an object in one or more of the first, second, third and/or fourth zones z1-z4. In some examples, the warning is issued based on a change of a distance between the MHV 100 and an object detected within a zone z1-z4. For instance, the frequency and/or amplitude of an audible signal could depend on said distance. The warning is in some examples based on the detected object transitioning from one zone to another, which in addition to warn an operator has the benefit of assisting the operator of his/her relative placement to the MHV 100 for smooth operation of the MHV.

According to some examples, the at least one object sensor 172 comprises at least one of: an ultra-sonic radar; a camera; a light detection and ranging, LIDAR, sensor; a photocell and/or a vibration sensor. Ultra-sonic radars and photocells provide cost-effective and reliable sensors for detecting the presence of an object within the predetermined region, while cameras and LIDARs further enable the use of classification algorithms to classify a detected object. The classification can be useful to discern what has entered the predetermined region. For instance, if it is determined via a classifier that the arm of an operator is holding the tiller arm of the HMV over the third region while the rest of the operator is present in the fourth region, the control unit 170 may be configured to determine that the operator is deemed to be present only in the fourth region.

The location of an object within a volume and the corresponding projection onto a plane parallel to the ground may thus be interpreted differently. Thus, according to some examples, the predetermined region 174 comprises a 3D volume and/or a 2D plane, preferably said 3D volume and/or 2D plane does not extend in vertical direction higher than the attachment point of the tiller handle when pivoted to a horizontal position. By limiting the vertical extension of the predetermined region 174, false positives of object detection within the predetermined region 174 can be significantly reduced. In some examples, the first, second, third and/or fourth zones z1-z4 are defined as 2D-projections onto a plane parallel to the ground. Figure 1a illustrates an example of what zones spanning a 3d volume could look like, while Figures 1b and 1c illustrate what corresponding 2D-projections onto planes parallel to the ground could look like. Thus, in some examples, the determination of the presence of an object within the predetermined region 174 and/or any of the zones z1-z4 comprised within the predetermined region are further based on whether spatial coordinates of an object present within a 3D volume relating to the predetermined region fall within respective 2D-projected regions and/or zones when projected onto the ground.

It may be desirable to be able to manually adjust how the MHV 100 should respond or even switch of the safety behaviour depending on various use cases. Thus, according to some examples, the MHV 100 further comprises a manual override mechanism configured to override the issuing of the warning of a potential collision and/or adjusting of said at least one of: the maximum speed of the MHV and a maximum acceleration of the MHV. In some examples, parameters defining the first, second, third and fourth region and/or MHV configuration upon detecting the presence of an object in any of the regions z1-z4 can be manually adjusted. In some further examples, specific settings relating to the manual adjustments can be stored, thereby enabling an operator to switch between settings suitable for various operating scenarios.

According to some examples, the at least one object sensor 172 is configured to transmit an error message based on an object sensor being obscured or detecting a malfunction, and wherein the control unit is configured to limit the maximum speed and/or acceleration of the MHV to a predetermined limit. The MHV is thereby configured to prevent an operator from using the MHV as if there were no problems with it.

The first, second, third and fourth zones z1-z4 have been described as preferably starting at the second side S2. This is a non-limiting example leading to the zones overlapping. In other words, one or more zones is arranged to not overlap with any of the other zones. Additionally, the wording, starting at the second side, can mean that a zone begins directly at the second side S2 or some distance away from it. Stated differently, according to some aspects, one or more of the zones starts a predetermined distance from the second side. In some examples, at least one of the zones start directly at the second side. In other words, the zones do not have to start at the same distance from the second side even if they are said to start at the second side S2.

Overlapping zones presents an opportunity to apply the restrictions of different zones where the zones overlap.

Thus, according to some examples, the greatest limitation to the manoeuvrability of the MHV with respect to maximum speed, maximum acceleration and deceleration dictated by each zone is applied to the MHV in regions where zones overlap. According to some examples, the control unit is configured to set the maximum speed, maximum acceleration and maximum deceleration of the MHV in regions of overlapping zones to the lowest maximum speed, lowest maximum acceleration and highest maximum deceleration of the overlapping zones when detecting the presence of an object in the respective regions of overlapping zones.

Though up to four zones z1-z4 have been illustrated for the predetermined region 174, it should be noted that these are non-limiting examples, and the person skilled in the art is free to add as many zones within the predetermined region as deemed necessary to achieve the desired functionality. Any of the zones in addition to said first zone can impose any limit on the maximum speed and/or maximum acceleration and/or maximum deceleration of the MHV and/or issue a warning, in a manner analogous to that described in relation to the first, second, third and fourth zones z1-z4.

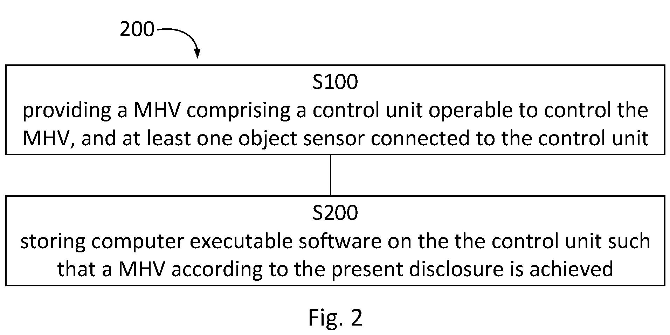

Figure 2 shows a method 200, according to a second aspect of the present disclosure, of modifying an MHV for achieving a material handling vehicle according to the present disclosure.

The method 200 comprises providing S100 a MHV comprising a control unit operable to control the MHV, and at least one object sensor connected to the control unit. The method 200 further comprises storing S200 computer executable software on the control unit such that a MHV 100 according to the present disclosure, as described above and below, is achieved.

Since the method 200 provides a MHV 100 according to the present disclosure, the method has all the technical effects and advantages of the disclosed MHV 100.

The person skilled in the art realizes that the present disclosure is not limited to the preferred examples described above. The person skilled in the art further realizes that modifications and variations are possible within the scope of the appended claims. Additionally, variations to the disclosed examples can be understood and effected by the skilled person in practicing the claimed disclosure, from a study of the drawings, the disclosure, and the appended claims.

## Claims

1. A material handling vehicle, MHV, (100) comprising:
- an electric drive motor (110);
- an energy source (120), preferably a battery, for powering the electric drive motor (110), and the material handling vehicle (100) in general;
- a hydraulic system (130), comprising a hydraulic pump (132) powered by an electric motor (134) or the electric drive motor (110);
- a load carrier (140) on a first side (S1) of the MHV (100), preferably the load carrier comprises at least two forks, powered by the hydraulic system (130);
- a tiller handle (150) for controlling the material handling vehicle by a walking operator (op);
- a chassis (160) which has at least one drive wheel (162) powered by the electric drive motor (110) and at least two further non-powered wheels (164); the chassis (160) having a width (wc);
- a control unit (170) that is connected to a material handling vehicle bus, for controlling the functions of the vehicle, and for receiving data from comprised sensors on the vehicle;
- at least one object sensor (172) configured to obtain measurement data within a predetermined region (174) comprising one or more zones, the predetermined region (174) extending outwards from a second side (S2) of the MHV, the second side (S2) being opposite the first side (S1) of the MHV;
wherein the control unit (170) is configured to receive the measurement data from the at least one object sensor (172);
**characterized in that** the predetermined region (174) comprises a first zone (z1), preferably beginning at the second side (S2) of the MHV and, extending outwards in a direction along a central axis (180) of the MHV, ending at a first distance (d1) from the second side (S2) of the MHV, the first zone (z1) having a width (w1) less than or equal to the width of the chassis (wc);
wherein the control unit (170) is configured to determine the presence of an object within the predetermined region (174) based on the measurement data; and wherein the control unit (170) is configured to brake, and/or brake to stop, and/or stop the MHV based on having determined the presence of an object within the first zone (z1).

2. The MHV (100) according to claim 1, wherein the predetermined region (174) further comprises a second zone (z2), preferably beginning at the second side (S2) of the MHV and, extending outwards in a direction along the central axis (180) of the MHV, ending at a predetermined distance (d2) from the end of the first zone (z1), preferably the second zone (z2) having a width (w2) less than or equal to the width (w1) of the first zone, and wherein the control unit (170) is configured to limit the maximum speed of the MHV in the direction of the second side (S2) to a predetermined first speed limit based on having determined the presence of an object within the second zone (z2).

3. The MHV according to claim 2, wherein the predetermined region (174) further comprises a third zone (z3), preferably beginning at the second side (S2) of the MHV and, extending outwards in a direction along the central axis (180) of the MHV, ending at a predetermined distance (d3) from the end of the second zone (z2), preferably the third zone (z3) having a width (w3) less than or equal to the width (w2) of the second zone, and wherein the control unit (170) is configured to limit the maximum speed of the MHV in the longitudinal direction of the MHV in the direction of the second side (S2) to a predetermined second speed limit based on having determined the presence of an object within the second zone (z2), the second speed limit being greater than the first speed limit, preferably the third zone (z3) has a width (w3) less than half of the width (wc) of the chassis (160).

4. The MHV (100) according to any of claims 2-3, wherein the first and/or the second and/or third distance (d1,d2,d3) is determined by the control unit (170) based on at least one of: a speed of the MHV, an acceleration of the MHV, a steering angle of the MHV, a current load on the load carrier (140) and a breaking capacity of the MHV.

5. The MHV (100) according to any of the preceding claims, wherein the predetermined region (174) further comprises a fourth zone (z4), preferably beginning at the second side (S2) of the MHV and, extending outwards in a direction along the central axis (180) of the MHV, ending at a predetermined distance (d4) from the end of the third zone (z3), the fourth zone (z4) preferably having a width (w4) wider than the width of the chassis (wc), and wherein the control unit (170) is configured to limit a maximum acceleration of the MHV when detecting the presence of an object in the fourth zone (z4).

6. The MHV (100) according to any of the preceding claims, wherein the control unit (170) is configured to issue a warning of a potential collision and/or adjust at least one of: the maximum speed of the MHV and a maximum acceleration of the MHV based on having determined the presence of an object within the predetermined region (174) and the tiller handle (150) is not in upright position or in a position where the tiller handle is being forced down to an end stop angled position, preferably the warning comprises an audio and/or visual signal and/or a sensory signal.

7. The MHV according to any of the preceding claims, wherein the control unit (170) is further configured to issue the warning of a potential collision and/or adjust said at least one of: the maximum speed of the MHV and a maximum acceleration of the MHV only when the MHV is moving in the longitudinal direction of the MHV in the direction of the second side (S2).

8. The MHV according to any of the preceding claims, wherein the at least one object sensor (172) comprises at least one of: an ultra-sonic radar; a camera; a light detection and ranging, LIDAR, sensor; a photocell and/or a vibration sensor.

9. The MHV according to any of the preceding claims, wherein the predetermined region (174) comprises a 3D volume and/or a 2D plane, preferably said 3D volume and/or 2D plane does not extend in a vertical direction higher than the attachment point of the tiller handle when pivoted to a horizontal position.

10. The MHV according to any of the preceding claims, wherein the MHV (100) further comprises a manual override mechanism configured to override the issuing of the warning of a potential collision and/or adjusting of said at least one of: the maximum speed of the MHV and a maximum acceleration of the MHV.

11. The MHV according to any of the preceding claims, wherein the at least one object sensor (172) is configured to transmit an error message based on an object sensor being obscured or detecting a malfunction, and wherein the control unit is configured to limit the maximum speed and/or acceleration of the MHV to a predetermined limit.

12. The MHV according to any of the preceding claims, wherein the control unit (170) is configured such that the first zone (z1) and/or the second zone (z2) and/or the third zone and/or the fourth zone (z4) preferably all zones (z1,z2,z3,z4), is/are active when an operator is walking and controlling the MHV with the tiller handle (150).

13. The MHV according to any of the preceding claims, wherein the greatest limitation to the manoeuvrability of the MHV with respect to maximum speed, maximum acceleration and deceleration dictated by each zone is applied to the MHV in regions where zones overlap.

14. The MHV according to any of the preceding claims, wherein the control unit (170) is configured to set the maximum speed, maximum acceleration and maximum deceleration of the MHV in regions of overlapping zones to the lowest maximum speed, lowest maximum acceleration and highest maximum deceleration of the overlapping zones when detecting the presence of an object in the respective regions of overlapping zones.

15. Method (200) of modifying a MHV comprising the steps of:
- providing (S100) a MHV comprising a control unit operable to control the MHV, and at least one object sensor connected to the control unit, and
- storing (S200) computer executable software on the control unit such that a MHV (100) according to any of the claims 1-14 is achieved.
